# EUROPÄISCHE PATENTSCHRIFT

(11) **EP 2 287 025 B1**
(45) Veröffentlichungstag und Bekanntmachung des Hinweises auf die Patenterteilung: **21.11.2012**
(21) Anmeldenummer: 10014429.4
(22) Anmeldetag: 18.01.2008
(51) Int. Cl.: B60G 7/02, F16F 1/38, F16F 3/087

(54) **Lageranordnung für Fahrzeugteile, Radaufhängung sowie Verfahren zur Herstellung eines Lagegehäuses für die Lageranordnung**
Bearing arrangement for automobile components, wheel suspension and method for producing a bearing housing for the bearing arrangement
Ensemble de palier pour pièces de véhicules, suspension de roue et procédé de fabrication d'un boîtier de palier pour l'ensemble de palier

(30) Priorität: 07.04.2007 DE 102007016770
(43) Veröffentlichungstag der Anmeldung: 23.02.2011
(62) Teilanmeldung aus: 08000918.6
(73) Patentinhaber: Audi AG, 85045 Ingolstadt (DE)
(72) Erfinder: Lamers, Stephan, 93336 Altmannstein (DE); Leitner, Wilfried, 85072 Eichstätt (DE)

(56) Entgegenhaltungen:
- EP-A1- 1 586 789
- EP-A1- 1 674 757
- EP-A1- 1 686 282
- DE-A1- 10 234 046

## Beschreibung

Die Erfindung betrifft eine Lageranordnung für Fahrzeugteile nach dem Oberbegriff des Patentanspruches 1.

Eine derartige Lageranordnung wird bei Kraftfahrzeug-Radaufhängungen zur Anlenkung von Radführungselementen, etwa einem Quer-, Längs- und/oder Trapezlenker, an einem Radträger eingesetzt. Die Lageranordnung kann aus einem radial inneren Torsionslager bestehen, das über ein radial äußeres Druck-Schublager in einem Lagergehäuse abgestützt ist. Durch entsprechende Auslegung des inneren und des äußeren Lagers können die elastokinematischen Eigenschaften der Radaufhängung gezielt gestaltet werden. Beispielhaft kann die elastische Nachgiebigkeit der Lageranordnung in einer Fahrzeugquerrichtung oder die elastische Nachgiebigkeit einer Schwenkbewegung zwischen dem Radführungselement und dem Radträger gezielt eingestellt werden.

Aus der EP 1 674 757 A1 ist eine gattungsgemäße Lageranordnung für ein Kraftfahrzeug bekannt, bei der ein elastisches Lager einen axial offenen Freiraum aufweist, in dem ein Radialanschlag einragt. Mit Hilfe des Radialanschlages kann bei einer Bewegung des Lagers in einer Schub-Richtung Schmutz und/oder Eis aus dem Freiraum herausgeschoben werden. Aus der EP 1 586 789 A1 ist eine weitere Lageranordnung bekannt, bei der bei einem einfachen Lageraufbau eine leichtgängige Schwenkung eines Fahrerhauses bei reduzierter Korrosionsbelastung des Lagers sowie hoher Lagerlebensdauer und klapperfreier Lagerung möglich ist.

Aus der DE 102 34 046 A1 ist eine weitere Lageranordnung für Fahrzeugteile bekannt, und zwar mit einem radial inneren Torsionslager und einem radial äußeren Druck-Schublager, das in einem Gehäuse in einer Fahrzeug-hochrichtung relativ steif und in einer Fahrzeugquerrichtung relativ weich ausgebildet ist. Das Druck-Schublager ist dabei unter Vorspannung in einem Aufnahmeauge eines äußeren Lagergehäuses abgestützt.

Die aus der DE 102 34 046 A1 bekannte Lageranordnung weist eine große Anzahl von Lagerkomponenten auf, deren Zusammenbau fertigungstechnisch aufwendig ist. Umfangsseitig um einen 90°-Winkel versetzt zum Druck-Schublager sind zwischen dem Torsionslager und dem Lagergehäuse verschmutzungsanfällige offene Freiräume ausgebildet, in denen sich Schmutz- oder Eispartikel sammeln können, die die Funktionsfähigkeit beeinträchtigen können.

Die Aufgabe der Erfindung besteht darin, eine Lageranordnung für Fahrzeugteile bereitzustellen, die einen einfachen Aufbau aufweist und funktionssicher ist.

Die Aufgabe der Erfindung ist durch die Merkmale des Patentanspruches 1 gelöst. Vorteilhafte Weiterbildungen der Erfindung sind in den jeweiligen Unteransprüchen offenbart.

Die erfindungsgemäße Lageranordnung ist in einer Schub-Richtung dadurch elastisch nachgiebig gestaltet, dass zumindest ein Freiraum zwischen dem Aufnahmeauge und dem inneren Lager vorgesehen ist. Der Freiraum ist in Axialrichtung offen gestaltet und daher verschmutzungsanfällig. D. h., dass eine Soll-Schubbewegung des nachgiebig gelagerten inneren Lagers behindert ist, sofern sich Schmutz, Eis und/oder Schnee im Freiraum ablagert. Um daher den Freiraum zwischen Aufnahmeauge und darin angeordnetem Lager verschmutzungsfrei zu halten, ist gemäß dem kennzeichnenden. Teil des Anspruches 1 ein Ausschubelement vorgesehen. Das Ausschubelement ragt in den Freiraum und übt bei einer Schubbewegung des inneren Lagers in der Schub-Richtung eine Axialkraftkomponente auf die im Freiraum vorhandenen Schmutz-, Eis- oder Schneepartikel aus. Das Ausschubelement drückt daher, während das innere Lager im Aufnahmeauge arbeitet, Partikel aus dem Freiraum heraus, so dass das innere Lager auch unter schwierigen Verschmutzungsbedingungen funktionssicher in der Schub-Richtung nachgibt.

Zusätzlich zu dem oben beschriebenen Ausschubelement weist die Lageranordnung eine Dichtlippe auf, die in den Freiraum hineinragt und eine Schmalseite des Freiraums zumindest teilweise vom übrigen Freiraum abschirmt. Die Dichtlippe wirkt als ein Steinabweiser, der ein Verklemmen von Schmutzpartikeln im Freiraum, insbesondere in dessen Schmalseiten, verhindert. Ein solches Verklemmen von Steinen erfolgt insbesondere bei in etwa sichelförmig ausgebildeten Freiräumen in dessen spitzwinklig zulaufenden, schmalen Endbereichen.

Der Freiraum ist von, in Schub-Richtung gegenüberliegenden Seitenwänden begrenzt. Bei einer einfachen Ausführungsform kann das Ausschubelement zumindest eine sich keilförmig erstreckende Ausschubfläche aufweisen, die den Freiraum in Lager-Axialrichtung ausweitet. Alternativ kann die Seitenwand im Profil eine Doppelkeilkontur mit axial benachbarten Ausschubflächen aufweisen, die den Freiraum in der Lager-Axialrichtung zu beiden Axialseiten ausweiten.

Bei einer kompakten Ausführung der Lageranordnung kann der Freiraum im Seitenprofil nicht rechteckförmig, sondern sichelförmig gebildet sein, und zwar mit einem ausgebauchten Mittelbereich großer freier Spaltbreite sowie spitzwinklig zulaufenden Endbereichen. Das erfindungsgemäße Ausschubelement kann dabei vorteilig insbesondere im ausgebauchten Mittelbereich des Freiraums angeordnet sein. Für eine einfache Formgebung ist es fertigungstechnisch von Vorteil, wenn das Ausschubelement aus einem Elastomermaterial gebildet ist.

Die Lageranordnung kann bevorzugt ein radial inneres Torsionslager aufweisen, das über ein radial äußeres Druck-Schublager unter Vorspannung im Aufnahmeauge abgestützt ist. Auf diese Weise ist bei einer Lagerbelastung in der Schub-Druck-Richtung eine elastisch nachgiebige Schubbewegung des Torsionslagers erreicht. Gleichzeitig kann das Torsionslager eine Schwenkbewegung zwischen den angelenkten Fahrzeugteilen elastisch dämpfen.

Für eine zuverlässige Abdeckung der Freiraum-Schmalseite kann die Dichtlippe den Freiraum im Wesentlichen überbrücken. Dabei kann die Dichtlippe als ein Elastomerteil ausgeführt sein, das vorzugsweise am inneren Lager anvulkanisiert ist.

Zusätzlich kann das innere Lager, etwa das Torsionslager, über zumindest eine äußere Elastomerschicht bzw. Lagerschicht in dem Aufnahmeauge elastisch nachgiebig abgestützt sein. Die äußere Elastomerschicht kann den vorgenannten äußeren Druck-Schublager entsprechen und unter Vorspannung das innere Lager gegenüber dem Aufnahmeauge abstützen.

Die Flächengeometrie der Elastomerschicht kann derart gestaltet sein, dass es quer zur Lager-Axialrichtung zumindest zwei voneinander beabstandete, vorzugsweise zur Lagerachse symmetrische Flächenbereiche aufweist. Eine solche Flächengeometrie der Elastomerschicht bzw. der Lagerschicht ist im Hinblick auf den Lasteintrag in das innere Lager vorteilhaft. So erhöht sich der Lasteintrag beidseitig der Lagerachse, während der zentrische Lasteintrag auf das innere Lager reduziert ist. Dadurch werden Spreizkräfte reduziert, die in Querrichtung zum Lasteintrag auf das innere Lager wirken, so dass eine frühzeitige Beschädigung des inneren Lagers verhindert ist.

Bevorzugt können für eine günstige Krafteinleitung die beidseitig der Lagerachse vorgesehenen Flächenbereiche der Elastomerschicht großflächig sein. Dabei ist es fertigungstechnisch vorteilhaft, wenn die beiden Flächenbereiche der Elastomerschicht nicht voneinander getrennt sind, sondern über eine schmälere Verbindungsfläche miteinander verbunden sind.

Zur Einstellung der Steifigkeit kann der Elastomerschicht zumindest ein druckfestes Zwischenblech oder andere hochsteife, flächige Einlegeteile zugeordnet sein.

Zur Unterstützung einer günstigen Krafteinleitung können das Zwischenblech und eine Außenwand des Torsionslagers im Einbauzustand im wesentlichen gleich groß dimensioniert sein und einander überdecken. Die Ausdehnung der Elastomerschicht quer zur Lagerachse des inneren Lagers bzw. des Torsionslagers kann hierbei vorzugsweise der Ausdehnung der Außenwand des inneren Lagers entsprechen.

Für den Fall, dass das innere Lager als ein Torsionslager ausgebildet ist, kann das Torsionslager ein Innenteil, etwa eine innere Lagerhülse, sowie ein Außenteil aufweisen. Zwischen dem Innenteil und dem Außenteil des Torsionslagers kann eine Elastomerschicht anvulkanisiert oder auf sonstige Weise zwischengesetzt sein.

Für eine einfache Vorspannung der Elastomerschicht zwischen dem Außenteil und dem Innenteil des Torsionslagers kann das Außenteil einen Schlitz aufweisen bzw. aus zwei Halbschalen besteht, die die innere Lagerhülse des Torsionslagers in etwa hälftig umgreifen. Im demontierten Zustand können die beiden Halbschalen voneinander über einen Spalt beabstandet sein. Nach dem Einschieben der Lageranordnung in das Aufnahmeauge können die Halbschalen bzw. kann der Schlitz des Torsionslagers unter Vorspannung zusammengedrückt sein, wodurch der Spalt geschlossen ist.

Bevorzugt können die beiden Halbschalen mit ihren, einander zugewandten Stirnseiten mittels Formschlussverbindung miteinander gekoppelt werden. Dadurch ist eine belastungsbedingte Querverschiebung der beiden Halbschalen verhindert. So kann bei einer Lagerbelastung die Halbschale der Zugseite einen Teil der sich ergebenden Querkräfte der Halbschale der Druckseite übernehmen, wodurch die zugseitige Halbschale entlastet wird. Ebenso werden belastungsbedingte Spreizkräfte, die auf die eine Halbschale in Querrichtung wirken, von der anderen Halbschale aufgenommen. Die Formschlussverbindung kann bevorzugt eine Feder-Nut-Verbindung sein.

Zusätzlich kann eine Radaufhängung für ein Fahrzeug einen Radträger aufweisen, an dem zumindest ein Radführungselement über die erfindungsgemäße Lageranordnung angelenkt ist. Dabei kann die Lageranordnung in einem Aufnahmeauge eines, dem Radträger zugeordneten Lagergehäuses elastisch nachgiebig angeordnet sein. Für eine Bauteilreduzierung und eine Montagevereinfachung ist es dabei von Vorteil, wenn das Lagergehäuse materialeinheitlich und einstückig am Radträger ausgebildet ist.

Eine weitere fertigungstechnische Vereinfachung ergibt sich, wenn das Aufnahmeauge durch einen am Radträger oder an einem anderen Trägerbauteil erfolgenden Fräsbearbeitungsschritt hergestellt wird. Mittels des Fräswerkzeugs kann in einfacher Weise der Querschnitt des Aufnahmeauges unrund mit einem Drehanschlag für das äußere Druck-Schublager des elastischen Elements hergestellt werden.

Zur gezielten Einstellung der elastokinematischen Eigenschaften der Radaufhängung kann die Lageranordnung in Einbaulage im Radträger in der Fahrzeughochrichtung druckfest bzw. steif und in der Fahrzeugquerrichtung elastisch nachgiebig gelagert sein. Dabei kann das am Radträger angelenkte Radführungselement ein Trapezlenker mit zwei Lenkerarmen sein. Ein erster Lenkerarm kann mit der erfindungsgemäßen Lageranordnung zusammenwirken, während der zweite Lenkerarm mit einem in Fahrzeuglängsrichtung steifen, zweiten Lager zusammenwirken kann. Auf diese Weise werden auf das Radführungselement in Fahrzeuglängsrichtung wirkende Kräfte vom zweiten Lager - und nicht von der erfindungsgemäßen Lageranordnung - aufgenommen. Die erfindungsgemäße Lageranordnung bleibt daher in der Fahrzeuglängsrichtung steif, ohne dass entsprechende Axialanschläge an der Lageranordnung selbst vorgesehen werden müssen.

Nachfolgend ist ein Ausführungsbeispiel der Erfindung anhand der beigefügten Figuren beschrieben. Es zeigen:
- Fig. 1: in einer Explosionsdarstellung eine Radaufhängung für ein Kraftfahr- zeug mit einem Radträger und einem unteren Trapezlenker;
- Fig. 2: in Seitenansicht eine in Ruhelage gezeigte Lageranordnung zur Anlenkung des Trapezlenkers am Radträger;
- Fig. 3: eine Einzelheit A aus der Fig. 2;
- Fig. 4: die Lageranordnung in Schnittansicht;
- Fig. 5: in einer schematischen Teilschnittdarstellung den Radträger mit daran montiertem Trapezlenker;
- Fig. 6: die Einzelheit B aus der Fig. 5 in vergrößerter Ansicht;
- Fig. 7: die Lageranordnung in Einbaulage im Radträger;
- Fig. 8: die Lageranordnung in Ruhelage mit einem Teilschnitt durch das obere Druck-Schub-Lager;
- Fig. 9: einen Fräsbearbeitungsschritt zur Herstellung eines Aufnahmeauges für die Lageranordnung;
- Fig. 10: eine Prinzipskizze der Lageranordnung im Aufnahmeauge des Rad- trägers; und
- Fig. 11: eine Darstellung einer Variante der Lageranordnung im Aufnah- meauge entsprechend der Fig. 10.

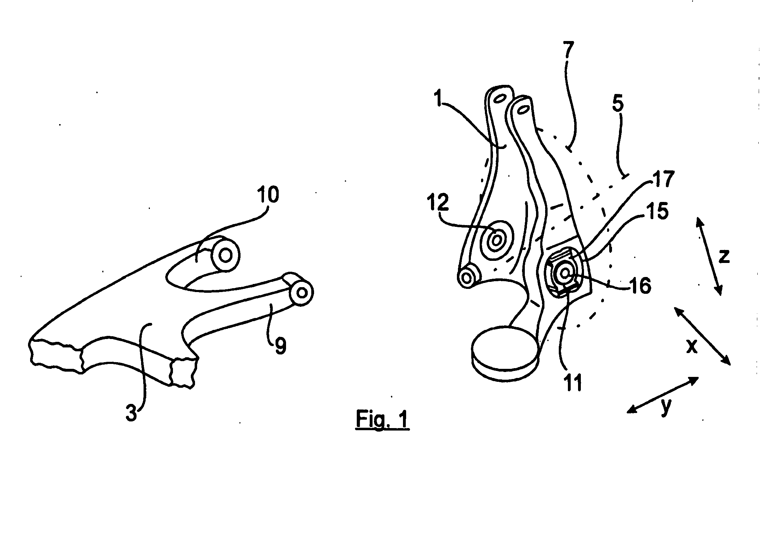

In der **Fig. 1** ist in einer schematischen Explosionsdarstellung eine Radaufhängung mit einem Radträger 1 und einem zugeordneten unteren Trapezlenker 3 gezeigt. Der Radträger 1 trägt ein um die Drehachse 5 drehbar gelagertes, nicht dargestelltes Fahrzeugrad. In der **Fig. 1** ist strichpunktiert eine zugeordnete Bremsscheibe 7 angedeutet. Der Trapezlenker 3 weist gemäß der **Fig. 1** zwei in Fahrzeuglängsrichtung x beabstandete Lenkerarme 9 und 10 auf, die im montierten Zustand jeweils an zugeordneten Lagern 11, 12 des Radträgers 1 schwenkbar angelenkt sind.

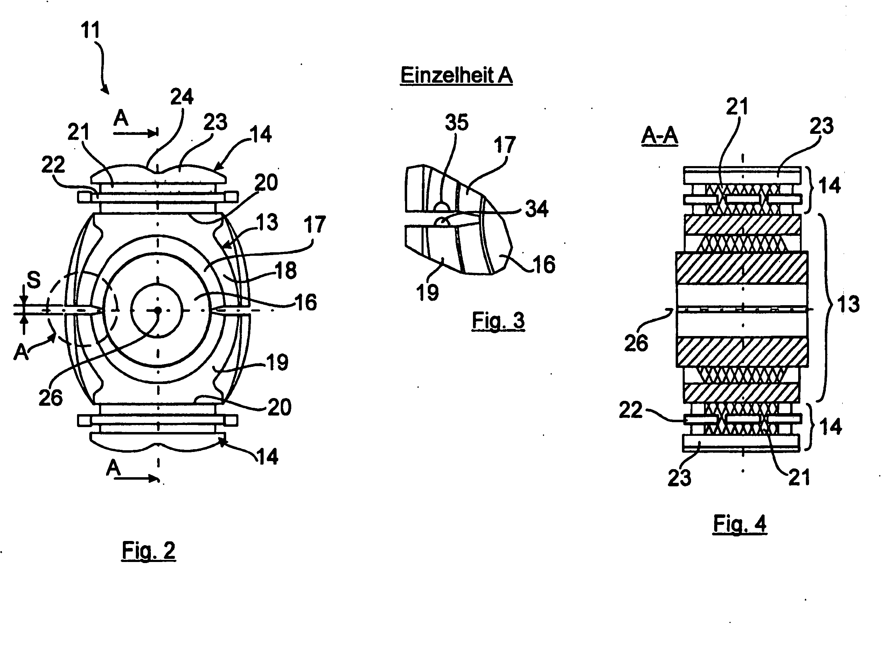

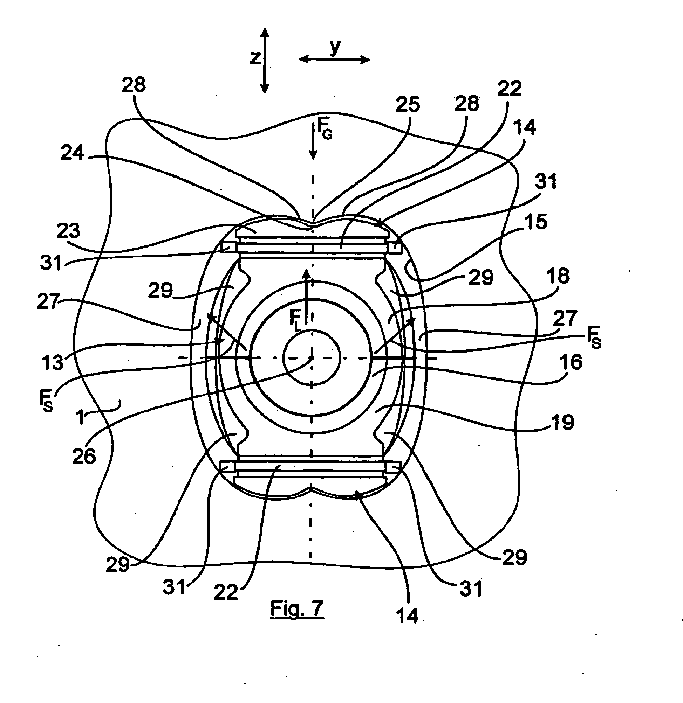

Zur Bereitstellung vorgegebener elastokinematischer Eigenschaften der Radaufhängung sind die Federkennungen der Lager 11, 12 entsprechend ausgelegt. So ist das Lager 11 gemäß der Fig. 2 eine Lageranordnung bestehend aus einem radial inneren Torsionslager 13 und einem radial äußeren Druck-Schublager 14. Das innere Torsionslager 13 ist in Einbaulage über das radial äußere Druck-Schublager 14 elastisch nachgiebig in einem Aufnahmeauge 15 des Radträgers 1 unter Vorspannung abgestützt, wie es beispielhaft aus den **Fig. 1** **oder** **7** hervorgeht.

Das radial innere Torsionslager 13 weist gemäß der **Fig. 2** als Innenteil eine innere Lagerhülse 16 sowie ein Außenteil 18, 19 auf, die über eine anvulkanisierte Elastomerschicht 17 miteinander verbunden sind. Um eine einfache Vorspannung der Elastomerschicht 17 beim Einschieben der Lageranordnung in das Lagerauge 15 zu gewährleisten, ist das Außenteil zweigeteilt mit den beiden gegenüberliegenden Halbschalen 18, 19. Die beiden Halbschalen 18, 19 sind brückenartig gestaltet und übergreifen jeweils hälftig die innere Lagerhülse 16. In dem, in der **Fig. 2** gezeigten demontierten Zustand sind die beiden Halbschalen 18, 19 an ihren einander gegenüberliegenden Stirnseiten über einen Spalt s voneinander beabstandet. Jede der Halbschalen 18, 19 weist außenseitig einander gegenüberliegende, plane Außenwände 20 auf, an denen jeweils ein Scheibenpaket als das Druck-Schublager 14 anvulkanisiert ist. Wie aus der **Fig. 4** hervorgeht, weist jedes der beiden Scheibenpakete 14 eine Elastomerschicht 21 auf, die mittels eines Zwischenblechs 22 zweigeteilt ist. Das Zwischenblech 22 ist mit Durchgangsöffnungen versehen, über die die beiden Elastomerteilschichten einstückig und materialeinheitlich verbunden sind.

Radial außenseitig ist an der Elastomerschicht 21 des jeweiligen Scheibenpakets 14 ein wellenförmig profiliertes Außenteil 23 mit einer mittigen Vertiefung 24 anvulkanisiert. Die Lageranordnung 11 stützt sich daher über die wellenförmig profilierten Außenteile 23 des Druck-Schublagers im Aufnahmeauge 15 ab.

Beim Einbau der Lageranordnung 11 in das Aufnahmeauge 15 des Radträgers 1 wird die Lageranordnung 11 an seinen gegenüberliegenden Außenteilen 23 zusammengepresst und unter Vorspannung in das Aufnahmeauge 15 eingeschoben. Dabei greifen die Vertiefungen 24 der Außenteile 23 formschlüssig in korrespondierende Führungsstege 25 des Aufnahmeauges 15. Die Führungsstege 25 sind einander gegenüberliegend im Aufnahmeauge 15 ausgebildet. Sie erstrecken sich entlang der Lagerachse 26 und ragen als Einführhilfe jeweils in die Vertiefungen 24 der Außenteile 23. Im in der **Fig. 7** gezeigten Einbauzustand die beiden Halbschalen 18, 19 an ihren zugewandten Stirnseiten in Anlage gedrückt, so dass der Spalt s geschlossen ist.

Wie aus der **Fig. 7** weiter hervorgeht, sind umfangsseitig um einen 90°-Winkel versetzt zu den beiden gegenüberliegenden Scheibenpaketen 14 jeweils gegenüberliegende Freiräume 27 zwischen dem Torsionslager 13 und dem Aufnahmeauge 15 vorgesehen. Die beiden Freiräume 27 ermöglichen bei einer Schubbelastung der eingebauten Lageranordnung 11 in der Fahrzeugquerrichtung y gezielte Leerwege des Torsionslagers 13. Das Torsionslager 13 ist daher bei einer Belastung in der Fahrzeugquerrichtung y elastisch nachgiebig verschiebbar. Zur Unterstützung dieser elastischen Nachgiebigkeit können sich die Elastomerschichten 21 und Zwischenbleche 22 der Scheibenpakete 14 in der y-Richtung elastisch gegeneinander verschieben. Demgegenüber sind die Scheibenpakete 14 in Fahrzeughochrichtung z mit großer Federsteifigkeit druckfest ausgelegt.

Die beiden gegenüberliegenden Führungsstege 25 des Aufnahmeauges 15 ragen, wie bereits erwähnt, nach Art einer Feder-Nut-Verbindung formschlüssig in die zugeordneten Vertiefungen 24 der Außenteile 23. Die Führungsstege 25 wirken dabei bei einer Torsionsbelastung wie Drehanschläge zur Verdrehsicherung der im Aufnahmeauge 15 gelagerten Lageranordnung 11. Die Führungsstege 25 sind im Profil im wesentlichen dreieckförmig gestaltet mit jeweils schräg gestellten seitlichen Sperrflanken 28, die umfangsseitig gegen die lagerseitigen Vertiefungen 24 drücken.

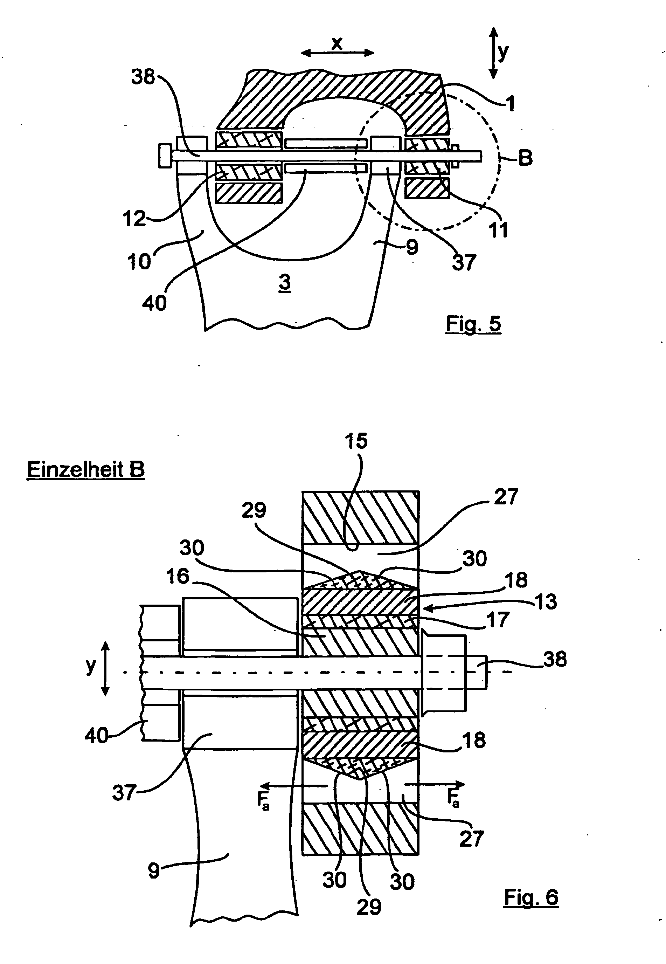

Gemäß der **Fig. 7** sind die in der Schub-Richtung bzw. y-Richtung vorgesehenen Freiräume 27 in etwa sichelförmig mit einem ausgebauchten Mittelbereich sowie spitzwinklig zulaufenden Endbereichen gebildet. Die torsionslagerseitige Begrenzungswand des jeweiligen Freiraums 27 ist mit einer konturierten Elastomerschicht 29 bedeckt. Das Profil der Elastomerschicht 29 ist in der Schnittansicht gemäß der **Fig. 6** gezeigt. Demzufolge weist die Elastomerschicht 29 eine zum Aufnahmeauge 15 weisende Keilkontur mit zwei sich in Lager-Axialrichtung keilförmig erstreckenden Ausschubflächen 30 auf. Die derart konturierte Elastomerschicht 29 bildet erfindungsgemäß ein Ausschubelement, das in den Freiraum 27 ragt. Bei einer Schubbewegung des Torsionslagers 13 in der Fahrzeugquerrichtung y, d. h. in der **Fig. 6** vertikal nach unten, üben daher die Ausschubflächen 30 eine Axial-Kraftkomponente Fₐ auf Schmutz und/oder Eis aus, das sich im Freiraum 27 festgesetzt hat. Auf diese Weise wird Schmutz und/oder Eis aus dem Freiraum 27 herausgedrückt.

Als zusätzliche Maßnahme, die Freiräume 27 verschmutzungsfrei und daher funktionsfähig zu halten, ist gemäß der **Fig. 7** an jedem der Zwischenbleche 22 beidseitig eine Elastomer-Dichtlippe 31 anvulkanisiert. Die Dichtlippe 31 ragt dabei mit ihrem freien Ende in den jeweiligen Freiraum 27 bis etwa in Anlage mit der gegenüberliegenden Innenwand des Aufnahmeauges 15. Auf diese Weise ist der spitzwinklig zulaufende Endbereich des sichelförmigen Freiraums 27 vom ausgebauchten Freiraum-Mittelbereich abgeschirmt. Die Dichtlippe 31 verhindert somit ein Verklemmen von Steinen im spitzwinklig zulaufenden Freiraum-Endbereich. Ein derartiges Verklemmen würde eine in Fahrzeugquerrichtung y erfolgende Schub- oder Druckbewegung der Scheibenpakete 14 behindern und so die elastische Nachgiebigkeit der Lageranordnung 11 in der Fahrzeugquerrichtung y beeinträchtigen.

Nachfolgend wird anhand der Fig. 7 die Lastverteilung in der Lageranordnung 11 beschrieben, wenn die Lagerhülse 16 mit einer Kraft F_{L} vertikal nach oben gegen das Aufnahmeauge 15 drückt.

In diesem Fall wird vom Aufnahmeauge 15 eine Gegenkraft F_{G} über das obere Scheibenpaket 14 in die obere Halbschale 18 eingeleitet. Für einen günstigen Lasteintrag in die obere Halbschale 18 ist es von Vorteil, die zentrische Belastung der Halbschale 18 zu reduzieren und anstelle dessen Lasteinträge in Querrichtung y beabstandet zur Lagerachse 26 zu erhöhen. Dadurch können auf die seitlichen Arme der Halbschale 18 wirkende Spreizkräfte F_{S} reduziert werden. Die Spreizkräfte F_{S} wirken auf die seitlichen Arme der jeweiligen Halbschale 18, 19 insbesondere bei einer zentrischen Belastung der Halbschalen 18, 19 und können zu einem Schalenbruch führen.

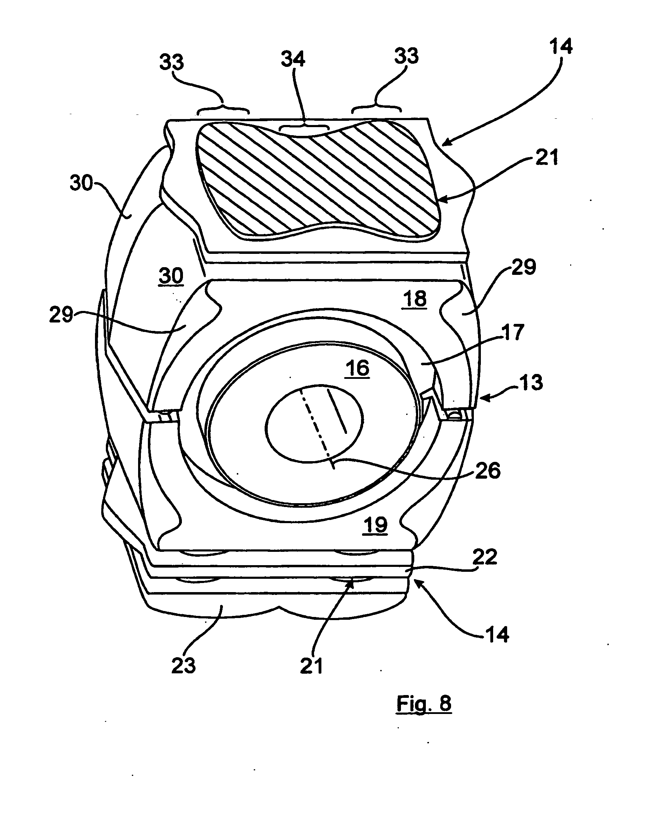

Die oben erwähnten günstigen Lasteinträge werden erfindungsgemäß durch die besondere Flächengeometrie der Elastomerschicht 21 des Scheibenpakets 14 erreicht, wie sie in der Teilschnittdarstellung der **Fig. 8** gezeigt ist.

Demzufolge weist die Elastomerschicht 21 zwei voneinander beabstandete großflächige Flächenbereiche 33 auf. Die beiden Flächenbereiche 33 sind voneinander quer zur Lagerachse 26 vorzugsweise symmetrisch beabstandet und über einen schmäleren Verbindungssteg 34 miteinander verbunden. Über die beiden großflächigen, symmetrisch angeordneten Flächenbereiche 33 der Elastomerschicht 21 erfolgen beidseitig der Lagerachse 26 hohe Lasteinträge in die Lagerschale 18, während die zentrische Belastung der Lagerschale 18 aufgrund des schmäleren Verbindungsstegs 34 reduziert ist. Entsprechend ist der mittlere, zentrische Bereich der Halbschale 18 entlastet, so dass die Gefahr einer Spreizung der Halbschale 18 radial nach außen reduziert ist.

Im Einbauzustand sind die Flächenschwerpunkte der Flächenbereiche 33 und 34 möglichst nahe über den Lagertrennstellen 13 positioniert, um die Biegemomente in den Lagerschalen 18, 19 gering zu halten.

Die der unteren Halbschale 19 zugeordnete Elastomerschicht 21 ist identisch zur oberen Elastomerschicht 21 ausgebildet. Bei einer entsprechenden Krafteinleitung vom Aufnahmeauge 15 in die untere Halbschale 19 würde daher ebenfalls ein günstiger Lasteintrag erfolgen.

Die zu einem Schalenbruch führende Spreizung der Halbschalen 18, 19 wird darüber hinaus durch die in der **Fig. 3** vergrößert dargestellten Formschlussverbindung 34, 35 zwischen den gegenüberliegenden Stirnseiten der Halbschalen 18, 19 des Torsionslagers 13 reduziert. Gemäß der **Fig. 3** ist die Formschlussverbindung eine Feder-Nut-Verbindung, bei der ein stirnseitiger Vorsprung 34 der unteren Halbschale 19 im eingebauten Zustand der Lageranordnung 11 mit einer stirnseitigen Nut 35 der oberen Halbschale 18 formschlüssig in Eingriff ist. Dadurch ist ein passgenauer Sitz der beiden Halbschalen 18, 19 im montierten Zustand erreicht. Außerdem kann bei einer Schub-Druck-Lagerbelastung die Halbschale der Zugseite einen Teil der Querkräfte der Halbschale der Druckseite übernehmen, wodurch diese entlastet wird. Da keine Querverschiebung zwischen den beiden Halbschalen 18, 19 möglich ist, wird die Spreizung der Halbschalen 18, 19 reduziert.

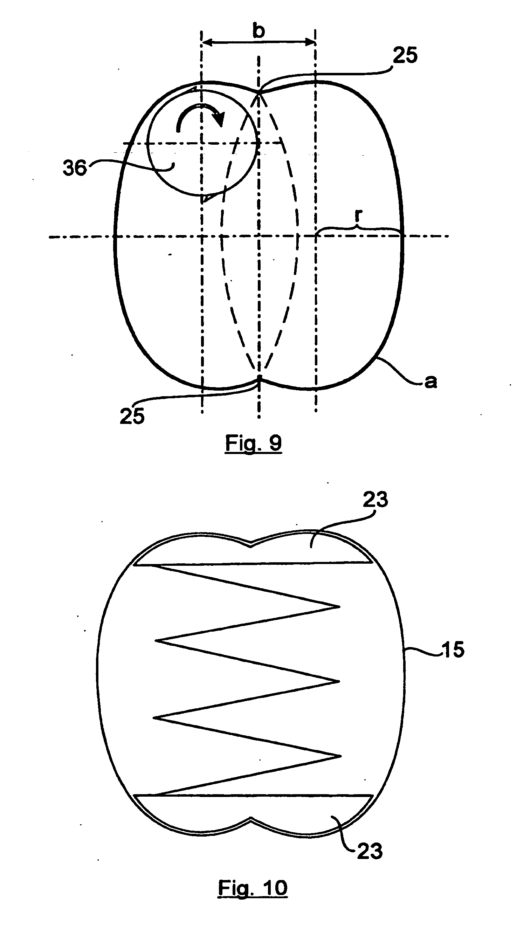

Wie aus der **Fig. 1** und der **Fig. 7** hervorgeht, ist die Lageranordnung 11 ohne Zwischenschaltung eines zusätzlichen Lagergehäuses unmittelbar im Radträger 1 eingeschoben. Das Aufnahmeauge 15 für die Lageranordnung 11 ist dabei fertigungstechnisch einfach in einem Fräsbearbeitungsschritt hergestellt, wie er in der **Fig. 9** angedeutet ist. Demzufolge wird das Aufnahmeauge 15 mittels eines Fräswerkzeugs 36 einer beispielsweise CNC-gesteuerten Fräsmaschine konturiert. Bei der Gestaltung der Innenkontur mit den gegenüberliegenden wellenartigen Führungsstegen 25 ist das Fräswerkzeug 36 derart bewegungsgesteuert, dass es den Verlauf einer hervorgehobenen Umfangslinie a um zwei identische, jedoch seitlich versetzte Ellipsen folgt, die sich überschneiden. Das Versatzmaß b zwischen den beiden Ellipsen ist dabei größer als ein Seitenradius r der beiden Ellipsen. Die erzeugte Kontur erlaubt einerseits die formschlüssige Verbindung zwischen Lager und Aufnahmeauge und andererseits den freien Bewegungsraum für das Torsionslager.

Die Anlenkung des unteren Trapezlenkers 3 mit seinen beiden Lenkerarmen 9, 10 am Radträger 1 geht aus den beiden **Fig. 5 und 6** hervor. Demzufolge liegt der Lenkerarm 9 des Trapezlenkers 3 mit seinem Befestigungsauge 37 stirnseitig an der inneren Lagerhülse 16 des Torsionslagers 13 an. Das Befestigungsauge 37 des Lenkerarms 9 ist mittels eines Schraubbolzens 38 drehfest mit der inneren Lagerhülse 16 verklemmt. Der Schraubbolzen 38 erstreckt sich dabei in der Fahrzeuglängsrichtung x auch durch das beabstandete zweite radträgerseitige Lager 12, das ebenfalls über den Schraubbolzen 38 mit dem zweiten Lenkerarm 10 in Klemmverbindung ist. Das Lager 12 ist in Fahrzeuglängsrichtung x steif ausgebildet.

Gemäß der **Fig. 5** ist zwischen dem Befestigungsauge 37 des Lagerarms 9 und dem zweiten Lager 12 eine Abstandshülse 40 zwischengesetzt, durch die sich der Schraubbolzen 38 erstreckt. Die Abstandshülse 40 stützt sich zwischen dem Befestigungsauge 37 des Lenkerarms 9 und dem Lager 12 ab. Auf diese Weise ist der Trapezlenker 3 über seinen ersten Lagerarm 9 an der Lageranordnung 11 elastisch nachgiebig in der Fahrzeugquerrichtung y und der Fahrzeughochrichtung z gelagert. Demgegenüber ist der Trapezlenker 3 über seinen zweiten Lenkerarm 10 am zweiten Lager 12 in der Fahrzeuglängsrichtung x steif gelagert, um insgesamt die gewünschte elastokinematischen Eigenschaften der Radaufhängung zu erzielen.

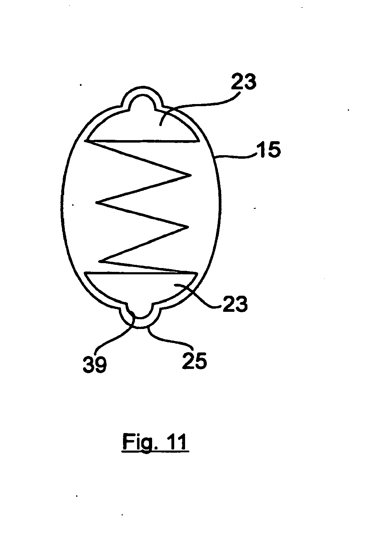

In der **Fig. 11** sind gemäß einer Variante der Erfindung die Drehanschläge 25 nicht als Vorsprünge im Aufnahmeauge 15 vorgesehen, sondern als in das Aufnahmeauge 15 eingefräste Nuten. So sind die Außenteile 23 mit Vorsprüngen 39 versehen, die entsprechend der vorangegangenen Figuren, in die jeweiligen Nuten 25 des Aufnahmeauges eingepresst sind.

Die **Fig. 11** ist wie die **Fig. 10** lediglich eine Prinzipskizze ohne detaillierte Darstellung des inneren Torsionslagers 13 sowie des äußeren Druck-Schublagers 14. Die in den **Figuren 1 bis 10** beschriebene Lageranordnung ist jedoch in entsprechender Weise auch mit dem gemäß der **Fig. 11** konturierten Aufnahmeauge 15 realisierbar. Darüber hinaus kann das Aufnahmeauge im Unterschied zu der näherungsweise ellipsenförmigen Kontur der **Fig. 11** bzw. der in den vorangegangenen Figuren angedeuteten Kontur jegliche andere Freiformkontur aufweisen.

## Patentansprüche

1. Lageranordnung für Fahrzeugteile, mit zumindest einem Lager (13), das zumindest in einer Schub-Richtung (y) elastisch nachgiebig in einem Aufnahmeauge (15) gelagert ist, wobei zwischen dem Aufnahmeauge (15) und dem Lager (13) zumindest ein axial offener Freiraum (27) vorgesehen ist, wobei in den Freiraum (27) ein Ausschubelement (30) ragt, das bei einer Bewegung des Lagers (13) in der Schub-Richtung (y) eine Axialkraftkomponente (Fₐ) auf im Freiraum (27) befindlichen Schmutz und/oder Eis ausübt, **dadurch gekennzeichnet, dass** in den Freiraum (27) zumindest eine Dichtlippe (31) ragt, die eine (schmatseite) des Freiraums (27) zumindest teilweise vom übrigen Freiraum (27) abschirmt.

2. Lageranordnung nach Anspruch 1, **dadurch gekennzeichnet, dass** der Freiraum (27) von in Schub-Richtung (y) gegenüberliegenden Seitenwänden begrenzt ist, die als Ausschubelement zumindest eine Ausschubfläche (30) aufweisen, die den Freiraum (27) in Lager-Axialrichtung (26) nach außen ausweitet.

3. Lageranordnung nach Anspruch 1 oder 2, **dadurch gekennzeichnet, dass** die Seitenwand im Profil eine Kontur mit zwei axial benachbarten Ausschubflächen (30) aufweist, die den Freiraum (27) in der Lager-Axialrichtung (26) zu beiden Axialseiten ausweiten.

4. Lageranordnung nach einem der Ansprüche 1, 2 oder 3, **dadurch gekennzeichnet, dass** der Freiraum (27) im Seitenprofil sichelförmig gebildet ist mit einem ausgebauchten Mittelbereich und spitzwinklig zulaufenden Endbereichen.

5. Lageranordnung nach einem der Ansprüche 1 bis 4, **dadurch gekennzeichnet, dass** das Ausschubelement (30) aus einem Elastomerelement (29) ausgebildet ist.

6. Lageranordnung nach einem der vorhergehenden Ansprüche, **dadurch gekennzeichnet, dass** das Lager (13) ein Torsionslager ist, das über ein radial äußeres Schub-Druck-Lager (14) unter Vorspannung im Aufnahmeauge (15) abgestützt ist.

7. Lageranordnung nach einem der vorhergehenden Ansprüche, **dadurch gekennzeichnet, dass** die Dichtlippe (31) den Freiraum (27) im Wesentlichen überbrückt.

8. Lageranordnung nach einem der vorhergehenden Ansprüche, **dadurch gekennzeichnet, dass** die Dichtlippe (31) ein freies Ende aufweist, das in den Freiraum (27) ragt.

9. Lageranordnung nach einem der vorhergehenden Ansprüche, **dadurch gekennzeichnet, dass** die Dichtlippe (31) ein Elastomerteil ist, das vorzugsweise am Lager (13) oder am Zwischenelement (22) anvulkanisiert ist.

10. Lageranordnung nach einem der vorhergehenden Ansprüche, für ein an einem Radträger (1) angelenktes Radführungselement (3), mit einem inneren Lager (13), vorzugsweise einem Torsionslager, das über zumindest eine äußere Lagerschicht, vorzugsweise eine Elastomerschicht (21), in einem Aufnahmeauge (15) elastisch nachgiebig abgestützt ist, **dadurch gekennzeichnet, dass** die Lagerschicht (21) quer zur Lagerachse (26) zumindest zwei voneinander beabstandete, vorzugsweise zur Lagerachse (26) symmetrische Flächenbereiche (33) aufweist.

11. Lageranordnung nach Anspruch 10, **dadurch gekennzeichnet, dass** die beidseitig der Lagerachse (26) vorgesehenen Flächenbereiche (33) der Lagerschicht (21) großflächig sind.

12. Lageranordnung nach Anspruch 10 oder 11, **dadurch gekennzeichnet, dass** die beiden Flächenbereiche (33) der Lagerschicht (21) über einen schmäleren Verbindungssteg (34) miteinander verbunden sind.

13. Lageranordnung nach Anspruch 10, 11 oder 12, **dadurch gekennzeichnet, dass** die Lagerschicht (21) eine Elastomerschicht ist, der zumindest ein hochsteifes, flächiges Einlegeteil (22) zugeordnet ist zur Einstellung der Steifigkeit der Elastomerschicht.

14. Lageranordnung nach Anspruch 13, **dadurch gekennzeichnet, dass** im Einbauzustand die Erstreckung der Lagerschicht (21) quer zur Lagerachse (26) im Wesentlichen der Erstreckung der Außenwand (20) des inneren Lagers (13) entspricht.

15. Lageranordnung nach einem der vorhergehenden Ansprüche, **dadurch gekennzeichnet, dass** das Torsionslager (13) ein Innenteil (16), insbesondere eine innere Lagerhülse, sowie ein Außenteil (18, 19) mit zwischengesetzter Elastomerschicht (17) aufweist.

16. Lageranordnung nach Anspruch 15, **dadurch gekennzeichnet, dass** das Außenteil des Torsionslagers (13) zwei Halbschalen (18, 19) aufweist, die die innere Lagerhülse (16) des Torsionslagers (13) in etwa hälftig umgreifen.

17. Lageranordnung nach Anspruch 16, **dadurch gekennzeichnet, dass** die Halbschalen (18, 19) mit ihren einander zugewandten Stirnseiten über eine Formschlussverbindung (34, 35) miteinander koppelbar sind.

18. Lageranordnung nach einem der Ansprüche 16 oder 17, **dadurch gekennzeichnet, dass** im nicht eingebauten Zustand die Halbschalen (18, 19) des Torsionslagers (13) über einen Spalt (s) voneinander beabstandet sind, der im Einbauzustand im Wesentlichen geschlossen ist.

19. Lageranordnung nach Anspruch 17 oder 18, **dadurch gekennzeichnet, dass** die Formschlussverbindung (34, 35) eine Feder-Nut-Verbindung ist.

20. Lageranordnung nach einem der vorhergehenden Ansprüche, **dadurch gekennzeichnet, dass** das Aufnahmeauge (15) in einem Fräsbearbeitungsschritt hergestellt ist.

21. Lageranordnung nach Anspruch 20, **dadurch gekennzeichnet, dass** der Drehanschlag (25) eine in das Aufnahmeauge (15) gefräste Nut oder ein Steg ist.

22. Lageranordnung nach einem der vorhergehenden Ansprüche, **dadurch gekennzeichnet, dass** die Lageranordnung einen Radträger (1) gelenkig mit einem Radführungselement (3) verbindet.

23. Lageranordnung nach Anspruch 22, **dadurch gekennzeichnet, dass** die Lageranordnung (11) das Radführungselement (3) in einem Aufnahmeauge (15) eines dem Radträger (2) zugeordneten Lagergehäuses elastisch nachgiebig lagert.

24. Lageranordnung nach einem der Ansprüche 22 oder 23, **dadurch gekennzeichnet, dass** das, das Aufnahmeauge (15) bereitstellende Lagergehäuse materialeinheitlich und einstückig mit dem Radträger (1) ausgebildet ist.

25. Lageranordnung nach einem der Ansprüche 22 bis 24, **dadurch gekennzeichnet, dass** das Aufnahmeauge (15) durch einen am Radträger (1) erfolgenden Fräsbearbeitungsschritt hergestellt ist.

26. Lageranordnung nach einem der Ansprüche 22 bis 25, **dadurch gekennzeichnet, dass** das im Radträger (1) vorgesehene Aufnahmeauge (15) einen unrunden Querschnitt mit zumindest dem Drehanschlag (25) für die Lageranordnung (11) aufweist.

27. Lageranordnung nach einem der Ansprüche 22 bis 26, **dadurch gekennzeichnet, dass** die Lageranordnung (11) in Einbaulage das Radführungselement im Radträger (1) in einer Fahrzeug-Hochrichtung (z) druckfest bzw. steif und in der Fahrzeugquerrichtung (y) elastisch nachgiebig lagert.

28. Lageranordnung nach einem der Ansprüche 22 bis 27, **dadurch gekennzeichnet, dass** das Radführungselement ein Trapezlenker (3) mit zwei Lenkerarmen (9, 10) ist, von denen der erste Lenkerarm (9) mit der Lageranordnung (11) zusammenwirkt, und der zweite Lenkerarm (10) mit einem in Fahrzeuglängsrichtung (x) steifen Lager (12) des Radträgers (1) zusammenwirkt.

## Claims

1. Bearing arrangement for vehicle parts, comprising at least one bearing (13) which is mounted in a receiving eye (15) in a resiliently flexible manner at least in a thrust direction (y), at least one axially open free space (27) being provided between the receiving eye (15) and the bearing (13), an expulsion element (30) projecting into the free space (27) and exerting an axial force component (Fₐ) on dirt and/or ice located in the free space (27) upon a movement of the bearing (13) in the thrust direction (y), **characterised in that** at least one sealing lip (31) projects into the free space (27) and screens a narrow side of the free space (27) from the remaining free space (27), at least in part.

2. Bearing arrangement according to claim 1, **characterised in that** the free space (27) is defined by side walls which oppose one another in the thrust direction (y) and comprise as an expulsion element at least one expulsion surface (30) which extends the free space (27) outwards in the axial direction (26) of the bearing.

3. Bearing arrangement according to either claim 1 or claim 2, **characterised in that** the side wall has, in profile, a contour comprising two axially adjacent expulsion surfaces (30) which extend the free space (27) on the two axial sides in the axial direction (26) of the bearing.

4. Bearing arrangement according to any of claims 1, 2 and 3, **characterised in that** the free space (27) has a sickle-shaped side profile comprising a bulged central region and end regions which taper at an acute angle.

5. Bearing arrangement according to any of claims 1 to 4, **characterised in that** the expulsion element (30) is formed of an elastomeric element (29).

6. Bearing arrangement according to any of the preceding claims, **characterised in that** the bearing (13) is a torsion bearing which is supported with pretensioning in the receiving eye (15) via a radially outer thrust bearing (14).

7. Bearing arrangement according to any of the preceding claims, **characterised in that** the sealing lip (31) substantially bridges the free space (27).

8. Bearing arrangement according to any of the preceding claims, **characterised in that** the sealing lip (31) has a free end which projects into the free space (27).

9. Bearing arrangement according to any of the preceding claims, **characterised in that** the sealing lip (31) is an elastomeric part which is preferably vulcanised to the bearing (13) or to the intermediate element (22).

10. Bearing arrangement according to any of the preceding claims, for a wheel guide element (3) articulated to a wheel carrier (1), comprising an inner bearing (13), preferably a torsion bearing, which is supported in a resiliently flexible manner in a receiving eye (15) via at least one outer bearing layer, preferably an elastomeric layer (21), **characterised in that** the bearing layer (21) has, transverse to the bearing axis (26), at least two surface regions (33) which are spaced apart from one another and preferably symmetrical about the bearing axis (26).

11. Bearing arrangement according to claim 10, **characterised in that** the surface regions (33) of the bearing layer (21), which regions are provided on both sides of the bearing axis (26), have a large area.

12. Bearing arrangement according to either claim 10 or claim 11, **characterised in that** the two surface regions (33) of the bearing layer (21) are interconnected via a relatively narrow connecting web (34).

13. Bearing arrangement according to claim 10, 11 or 12, **characterised in that** the bearing layer (21) is an elastomeric layer which is assigned at least one highly rigid, planar insert (22) for adjusting the rigidity of the elastomeric layer.

14. Bearing arrangement according to claim 13, **characterised in that**, in the mounted state, the extension of the bearing layer (21) transverse to the bearing axis (26) corresponds substantially to the extension of the outer wall (20) of the inner bearing (13).

15. Bearing arrangement according to any of the preceding claims, **characterised in that** the torsion bearing (13) comprises an inner part (16), in particular an inner bearing sleeve, and an outer part (18, 19), an elastomeric layer (17) being arranged between said inner part and said outer part.

16. Bearing arrangement according to claim 15, **characterised in that** the outer part of the torsion bearing (13) comprises two half shells (18, 19) which engage around approximately half of the inner bearing sleeve (16) of the torsion bearing (13).

17. Bearing arrangement according to claim 16, **characterised in that** the mutually opposing end faces of the half shells (18, 19) can be coupled to one another via an interlocking connection (34, 35).

18. Bearing arrangement according to either claim 16 or claim 17, **characterised in that**, in the unmounted state, the half shells (18, 19) of the torsion bearing (13) are spaced apart from one another via a gap (s) which is substantially closed in the mounted state.

19. Bearing arrangement according to either claim 17 or claim 18, **characterised in that** the interlocking connection (34, 35) is a tongue and groove joint.

20. Bearing arrangement according to any of the preceding claims, **characterised in that** the receiving eye (15) is produced in a milling step.

21. Bearing arrangement according to claim 20, **characterised in that** the rotation stop (25) is a groove milled in the receiving eye (15) or a web.

22. Bearing arrangement according to any of the preceding claims, **characterised in that** the bearing arrangement articulates a wheel carrier (1) to a wheel guide element (3).

23. Bearing arrangement according to claim 22, **characterised in that** the bearing arrangement (11) supports the wheel guide element (3) in a resiliently flexible manner in a receiving eye (15) of a bearing housing assigned to the wheel carrier (2).

24. Bearing arrangement according to either claim 22 or claim 23, **characterised in that** the bearing housing which provides the receiving eye (15) is formed in one piece with and of the same material as the wheel carrier (1).

25. Bearing arrangement according to any of claims 22 to 24, **characterised in that** the receiving eye (15) is produced by a milling step performed on the wheel carrier (1).

26. Bearing arrangement according to any of claims 22 to 25, **characterised in that** the receiving eye (15) provided in the wheel carrier (1) has a non-circular cross-section comprising at least the rotation stop (25) for the bearing arrangement (11).

27. Bearing arrangement according to any of claims 22 to 26, **characterised in that**, in the mounted state, the bearing arrangement (11) supports the wheel guide element in the wheel carrier (1) in a compression-proof or rigid manner in a vertical direction (z) of the vehicle and in a resiliently flexible manner in the transverse direction (y) of the vehicle.

28. Bearing arrangement according to any of claims 22 to 27, **characterised in that** the wheel guide element is a trapezoidal link (3) comprising two link arms (9, 10), of which the first link arm (9) cooperates with the bearing arrangement (11) and the second link arm (10) cooperates with a bearing (12) of the wheel carrier (1), which bearing is rigid in the longitudinal direction (x) of the vehicle.

## Revendications

1. Ensemble de palier pour pièces de véhicules, comprenant au moins un palier (13), qui est monté de manière déformable élastiquement au moins dans une direction de poussée (y) dans un oeillet récepteur (15), dans lequel il est prévu entre l'oeillet récepteur (15) et le palier (13) au moins un espace libre (27) ouvert axialement, dans lequel dépasse dans l'espace libre (27) un élément de poussée (30), qui exerce, lors d'un mouvement du palier (13) dans la direction de poussée (y), une composante de force axiale (Fₐ) sur la boue et/ou la glace qui se trouvent dans l'espace libre (27), **caractérisé en ce que**, dans l'espace libre (27), dépasse au moins une lèvre d'étanchéité (31) qui protège un petit côté de l'espace libre (27) au moins en partie de l'espace libre restant (27).

2. Ensemble de palier selon la revendication 1, **caractérisé en ce que** l'espace libre (27) est limité par des parois latérales opposées dans la direction de poussée (y), qui présentent comme élément de poussée au moins une face de poussée (30), qui élargit vers l'extérieur l'espace libre (27) dans la direction axiale (26) du palier.

3. Ensemble de palier selon la revendication 1 ou la revendication 2, **caractérisé en ce que** la paroi latérale présente en profil un contour avec deux faces de poussée (30) adjacentes axialement, qui élargissent l'espace libre (27) vers les deux côtés axiaux dans la direction axiale (26) du palier.

4. Ensemble de palier selon l'une quelconque des revendications 1, 2 ou 3, **caractérisé en ce que** l'espace libre (27) est conformé en croissant en profil latéral avec une zone centrale évasée et des zones d'extrémité qui font un angle aigu.

5. Ensemble de palier selon l'une quelconque des revendications 1 à 4, **caractérisé en ce que** l'élément de poussée (30) est formé d'un élément d'élastomère (29).

6. Ensemble de palier selon l'une quelconque des revendications précédentes, **caractérisé en ce que** le palier (13) est un palier à torsion qui s'appuie sous précontrainte dans l'oeillet récepteur (15) via un palier de poussée-compression radialement externe (14).

7. Ensemble de palier selon l'une quelconque des revendications précédentes, **caractérisé en ce que** la lèvre d'étanchéité (31) recouvre sensiblement l'espace libre (27).

8. Ensemble de palier selon l'une quelconque des revendications précédentes, **caractérisé en ce que** la lèvre d'étanchéité (31) présente une extrémité libre qui dépasse dans l'espace libre (27).

9. Ensemble de palier selon l'une quelconque des revendications précédentes, **caractérisé en ce que** la lèvre d'étanchéité (31) est une pièce élastomère qui est vulcanisée de préférence sur le palier (13) ou sur l'élément intermédiaire (22).

10. Ensemble de palier selon l'une quelconque des revendications précédentes, pour un élément de guidage de roue (3) articulé sur un support de roue (1), avec un palier interne (13), de préférence un palier de torsion, qui s'appuie de manière élastiquement déformable dans un oeillet récepteur (15) via une couche de palier externe, de préférence une couche d'élastomère (21), **caractérisé en ce que** la couche de palier (21) présente, transversalement à l'axe (26) du palier, au moins deux zones de surface (33) distancées l'une de l'autre, de préférence symétriques par rapport à l'axe (26) du palier.

11. Ensemble de palier selon la revendication 10, **caractérisé en ce que** les zones de surface (33) de la couche de palier (21) prévues des deux côtés de l'axe (26) du palier ont une grande surface.

12. Ensemble de palier selon la revendication 10 ou la revendication 11, **caractérisé en ce que** les deux zones de surface (33) de la couche de palier (21) sont reliées l'une à l'autre via une nervure de liaison plus étroite (34).

13. Ensemble de palier selon la revendication 10, 11, ou 12, **caractérisé en ce que** la couche de palier (21) est une couche d'élastomère, à laquelle est affectée une pièce plate noyée (22) très rigide pour régler la rigidité de la couche d'élastomère.

14. Ensemble de palier selon la revendication 13, **caractérisé en ce que**, à l'état incorporé, l'extension de la couche de palier (21) transversalement à l'axe (26) du palier correspond sensiblement à l'extension de la paroi externe (20) du palier interne (13).

15. Ensemble de palier selon l'une quelconque des revendications précédentes, **caractérisé en ce que** le palier de torsion (13) présente une partie interne (16), en particulier une douille de palier interne, ainsi qu'une partie externe (18, 19) avec une couche d'élastomère (17) disposée entre elles.

16. Ensemble de palier selon la revendication 15, **caractérisé en ce que** la partie externe du palier de torsion (13) présente deux demi-coques (18, 19), qui enserrent la douille de palier interne (16) du palier de torsion (13) à peu près de moitié.

17. Ensemble de palier selon la revendication 16, **caractérisé en ce que** les demi-coques (18, 19) peuvent être couplées l'une à l'autre avec leurs faces frontales tournées l'une vers l'autre via une liaison mécanique (34, 25).

18. Ensemble de palier selon l'une quelconque des revendications 16 ou 17, **caractérisé en ce que**, à l'état non incorporé, les demi-coques (18, 19) du palier de torsion (13) sont écartées l'une de l'autre via une fente (s) qui est sensiblement fermée à l'état incorporé.

19. Ensemble de palier selon la revendication 17 ou la revendication 18, **caractérisé en ce que** la liaison mécanique (34, 35) est une liaison à languette et rainure.

20. Ensemble de palier selon l'une quelconque des revendications précédentes, **caractérisé en ce que** l'oeillet récepteur (15) est élaboré dans une étape de fraisage.

21. Ensemble de palier selon la revendication 20, **caractérisé en ce que** la butée de rotation (25) est une rainure fraisée dans l'oeillet récepteur (15) ou une nervure.

22. Ensemble de palier selon l'une quelconque des revendications précédentes, **caractérisé en ce que** l'ensemble de palier relie un support de roue (1) par articulation avec un élément de guidage de roue (3).

23. Ensemble de palier selon la revendication 22, **caractérisé en ce que** l'ensemble de palier (11) monte de manière élastiquement déformable l'élément de guidage de roue (3) dans un oeillet récepteur (15) d'un boîtier de palier affecté au support de roue (2).

24. Ensemble de palier selon l'une quelconque des revendications 22 ou 23, **caractérisé en ce que** le boîtier de palier fournissant l'oeillet récepteur (15) est conformé de manière matériellement unitaire et d'une seule pièce avec le support de roue (1).

25. Ensemble de palier selon l'une quelconque des revendications 22 à 24, **caractérisé en ce que** l'oeillet récepteur (15) est élaboré par une étape de fraisage qui se fait sur le support de roue (1).

26. Ensemble de palier selon l'une quelconque des revendications 22 à 25, **caractérisé en ce que** l'oeillet récepteur (15) prévu dans le support de roue (1) présente une section transversale non ronde avec au moins la butée de rotation (25) pour l'ensemble de palier (11).

27. Ensemble de palier selon l'une quelconque des revendications 22 à 26, **caractérisé en ce que** l'ensemble de palier (11) à l'état incorporé monte l'élément de guidage de roue dans le support de roue (1) de manière résistant à la compression ou rigide dans le sens de la hauteur (z) du véhicule et de manière déformable élastiquement dans la direction transversale (x) du véhicule.

28. Ensemble de palier selon l'une quelconque des revendications 22 à 27, **caractérisé en ce que** l'élément de guidage de roue est une bielle trapézoïdale (3) avec deux bras (9, 10), dont le premier (9) coopère avec l'ensemble de palier (11) et le second (10) avec un palier (12) du support de roue (1) rigide dans la direction longitudinale (x) du véhicule.
